# EUROPEAN PATENT SPECIFICATION

(11) **EP 1 150 598 B1**
(45) Date of publication and mention of the grant of the patent: **20.08.2003**
(21) Application number: 00902729.3
(22) Date of filing: 08.02.2000
(51) Int. Cl.: A47J 27/21

(54) **IMPROVEMENTS RELATING TO ELECTRICALLY HEATED VESSELS**
VERBESSERUNGEN AN ELEKTRISCH GEHEIZTEN KOCHGEFÄSSEN
AMELIORATIONS APPORTEES A DES RECIPIENTS CHAUFFES ELECTRIQUEMENT

(30) Priority: 08.02.1999 GB 9902784
(43) Date of publication of application: 07.11.2001
(73) Proprietor: OTTER CONTROLS LIMITED, Buxton, Derbyshire SK17 6LA (GB)
(72) Inventor: O'NEILL, Robert Andrew, Derbyshire SK17 9NQ (GB); HOWARTH, John Anthony, Derbyshire SK17 6HS (GB)
(74) Representative: Milhench, Howard Leslie
(86) International application number: GB0000372
(87) International publication number: WO00047094

(56) References cited:
- EP-A- 0 285 839
- DE-A- 4 406 567
- DE-U- 9 411 507
- GB-A- 2 307 602

## Description

### Field of the Invention:

This invention concerns improvements relating to electrically heated vessels; particularly electrically powered water heating vessels such as kettles, hot water jugs, pots, pans, urns, laboratory equipment and the like.

### Background of the Invention:

GB 2 330 064 concerns the assembly of planar electric heating elements into the bodies of electrically heated vessels and further arrangements are disclosed in GB 2 344 506 Planar heating elements are commonly of two different types, namely the underfloor heating element which comprises a metal plate having a sheathed heating element clamped or clenched to the underside thereof or otherwise incorporated into the heating element structure (as for example in a die cast heating element), and the thick film heating element which comprises a resistance heating track or layer formed on the underside of an electrically insulating substrate comprised, for example of stainless steel which is coated with glass or other electrically insulating material, the resistance heating track or layer being formed on the surface of the glass and a further, protective, electrically insulating layer being formed over the resistive heating track or layer.

As described in GB 2 330 064 abovementioned, a kettle or jug having a planar heating element can have the heating element secured to the bottom of a vessel body moulding of plastics material which is open at its bottom end to accommodate the heating element. A further plastics material moulding is required to cover the heating element and secure it in place and also to cover the electrical parts. Other such arrangements are described in WO-A-9618331 (Strix) and EP-A-0 807 394 (Tefal). One advantage of the arrangements described in GB 2 330 064 is that they allow freedom of design of the vessel body and, in particular, allow the top of the vessel to have a smaller section than the bottom without necessitating complex mould cavity constructions and unsightly thick sections at the lower end of the vessel.

In our GB 2 344 506 the teaching of GB 2 330 064 is modified for application to glass bodied vessels where different problems apply.

EP-A-0 285 839 discloses an electrically heated vessel having a planar heating element secured therewithin by virtue of the planar heating element being pulled down towards integrally-formed abutment means provided in the vessel by means of a structure affixed to the bottom of the vessel.

### Summary of the Invention:

According to the present invention there is provided an electrically heated vessel having a planar heating element secured therewithin by virtue of the planar heating element being pulled down towards integrally-formed abutment means provided in the vessel by means of a structure affixed to the bottom of the vessel, known from EP-A-0 285 839 abovementioned, which is characterized according to the present invention in that the periphery of the planar heating element or of a support ring therefor is laterally spaced apart from the internal wall of the vessel and an elastomeric ring seal is provided to seal said space.

The present invention provides a departure from the teachings of GB 2 330 064 and GB 2 344 506 abovementioned for use in situations where design freedom as abovementioned is not a requirement, for example in the manufacture of a budget kettle, and where the top of the vessel body can be at least the same section as the bottom. The invention is applicable also to vessels as abovementioned but wherein some degree of design freedom is retained by forming the top of the vessel body in two parts one of which, as abovementioned, has at least the same action as the vessel bottom and the other of which, constituting the top of the vessel, can have a reduced section.

Described hereinafter are embodiments of the invention wherein a vessel body is provided where the top section of the body is the same as or larger than the bottom section so that the heating element can be introduced into the vessel through the top section, and where a seating for the element is provided in the bottom section, sealing of the element with respect to the vessel body being provided for at the junction of the heating element periphery with the internal wall of the vessel body and/or with the seating.

In a first embodiment of the invention which is described in detail hereinafter, a jug body moulding is formed with an integral base formed with a central circular opening for accommodating a 360° cordless connector component enabling the vessel body to be seated upon a base incorporating a complementary electrical connector component in any relative rotational orientation of the vessel body and base. An exemplary 360° cordless connector set is described in WO-A-9406185 and is available from us as our CS4/CP7 cordless connector set. A plurality of integrally-formed element support and location ribs are provided within the vessel body to provide a seating for a planar heating element introduced through the top of the body and pushed down onto the upper surfaces of the ribs. Sealing of the heating element is effected by use of an annular sealing ring which encircles the periphery of the heating element and has a plurality of radially outwardly extending flanges or fins which are resiliently deformed by contact with the vessel body. As described in GB 2 339 088, the 360° cordless connector component can be integrated with heating element overtemperature protection devices and can be arranged for attachment to the underside of the heating element and, in the present embodiment, provision is additionally made for securing the integrated 360° connector cum heating element protector device to the bottom of the moulded plastics vessel, the connector/protector device thus constituting a structural element which, by virtue of its attachment to the bottom of the vessel, serves to hold the heating element in place against the upper surfaces of the element support and location ribs.

In accordance with another embodiment which is also described in detail hereinafter, the annular sealing ring is provided about the periphery of a support moulding which is designed to sit in the bottom of the vessel and the planar heating element is placed on top of the upper surface of the support moulding, a portion of the sealing ring extending between the support moulding and the underside of the heating element. As with the first-mentioned embodiment, the heating element is arranged to be pulled down into the vessel, for example as in the first embodiment the heating element is pulled down onto the support ribs, and this compresses the portion of the sealing ring which extends between the support moulding and the heating element. By virtue of the arrangement of this embodiment, a completely flat heating element can be employed, the underside of the element being sealed with respect to the upper surface of the support moulding and the circumferential periphery of the support moulding being sealed radially with respect to the internal wall of the vessel.

In both of the abovementioned embodiments, a planar heating element of lesser diameter than the internal diameter of the vessel can be utilized by sealingly securing the heating element in an annular support ring and sealingly securing the support ring into the vessel in accordance with the teachings of the present invention.

The invention is not limited to vessels of uniform cross-section throughout their height. A planar heating element can be fixed into a uniform section vessel bottom part according to the teachings of the invention and then an upper part of the vessel can be affixed to and on top of the vessel bottom part. The design of the vessel upper part is thus limited only by the need to interface at its lowest section with the uppermost section of the bottom part of the vessel and otherwise places no limitations on the vessel designer.

The above and further features of the present invention are set forth in the appended claims and, together with advantages thereof, will be explained hereinafter by reference to exemplary embodiments shown in the accompanying drawings.

### Description of the Drawings:

Figure 1 shows a cut-away perspective view of a vessel body moulding of a first embodiment of the present invention;
Figure 2 is a cross-sectional view showing a heating element assembled into the vessel body moulding of Figure 1 according to the teachings of the present invention;
Figure 3 shows an alternative way of securing a planar heating element into a vessel body moulding as in Figure 1; and
Figure 4 shows a modification of the arrangement of Figure 3 enabling a smaller diameter heating element to be employed.

### Detailed Description of the Embodiments:

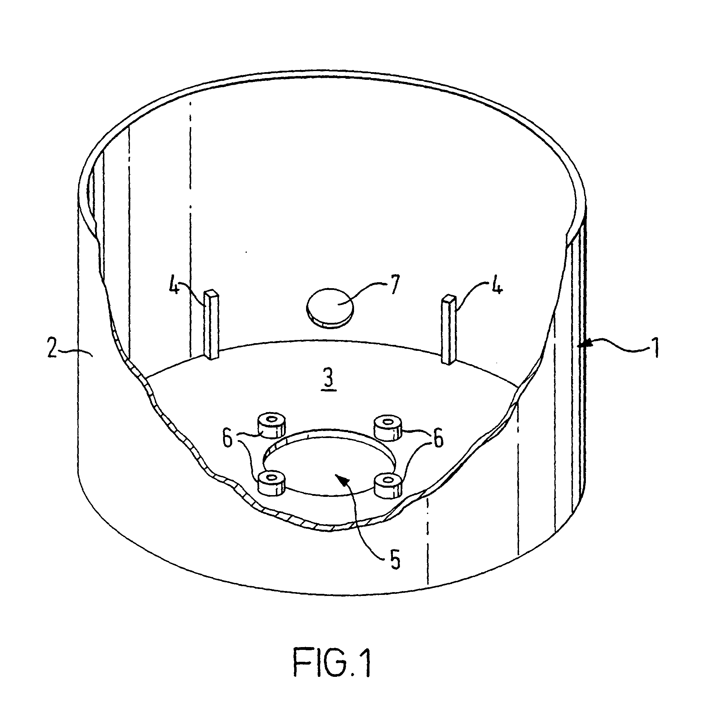

Referring to Figure 1, the present invention is particularly concerned with the securing of a planar heating element into a vessel body wherein the top section (above the heating element) is the same size as or larger than the bottom section (below the heating element) so that the heating element may be introduced via the top of the vessel, and can be pushed down to sit at a sealing location in the bottom of the vessel.

Figure 1 shows a cut-away view of a vessel moulding in accordance with this proposal. The vessel body 1 has plain vertical walls 2 extending from an integral horizontal base 3 and a plurality of integrally-formed ribs 4 (only two of which can be seen) are provided within the vessel body 1, the ribs 4 defining with their uppermost surfaces a seating for the heating element. The base or bottom 3 of the vessel body 1 is formed with a central opening 5 for accommodating the 360° cordless connector part of a connector/element protector control such as the Otter Controls' X4 control which is described in GB 2 339 088. Four bosses 6 are provided around the opening 5 and serve for mounting the connector/element protector control into the bottom of the vessel by means of screw-threaded fasteners.

An opening 7 in the side wall 2 of the vessel body 1 provides access below the level of the heating element, once affixed, to the base compartment of the vessel for wires interconnecting with, for example, a remotely sited steam-sensitive control, located for example in a handle of the vessel and arranged to switch off the supply of electricity to the heating element in response to the generation of steam when water boils in the vessel. In an alternative cordless vessel having a more conventional non-360° connector set, the opening 7 could provide for connecting the vessel-mounted connector part to the heating element and it could serve a similar function in a corded vessel.

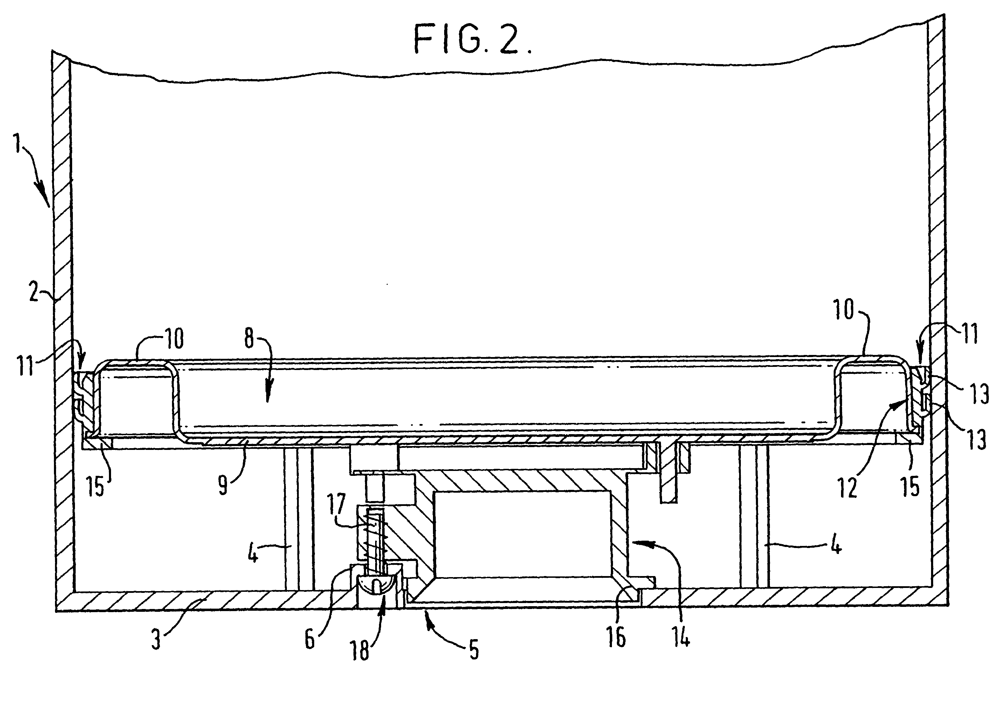

Figure 2 is a cross-sectional view showing a planar heating element mounted into a vessel body as shown in Figure 1. The heating element 8 shown is a thick film heating element as aforementioned, but could be any form of planar heating element. The heating element 8 has a resistance heating portion 9 on its underside and, radially outside of the resistance heating portion 9, has an annular formed rim 10 which provides a mounting for a temperature resistant elastomeric ring seal 11. More particularly, the radially outermost surface 12 of the formed rim 10 has a vertical face and a short outward projection at its bottom edge and the sealing ring 11 is a close (stretched) fit about the surface 12 and has a groove complementary to the projection at the bottom edge of the heating element rim 10 for securely and correctly locating the seal 11 about the periphery of the heating element 8. The other circumference of the seal 11 has a plurality of circumferential fins 13 which, when the heating element 8 and seal 11 are fitted into the vessel by being pushed down onto the tops of the support ribs 4 are deformed upwardly as shown. The fins 13 are thin enough to deform as the heating element is assembled into the vessel, but are sufficiently stiff and resilient to follow the internal profile of the vessel wall 2 and not only make an effective seal therewith, but also maintain the seal during any subsequent movement caused, for example, by temperature change.

Also shown in Figure 2 is an X4 cordless connector/control 14 which is secured to the undersurface of the heating element 8, for example in the manner described in GB 2 339 088. When the heating element 8 and attached X4 control 14 is mounted into the vessel body 1 and pushed down into place with the rim 10 of the heating element 8 located on the upper ends of the support ribs 4 with the lowermost horizontal part 15 of the seal 11 between the two, the 360° connector part 16 of the X4 engages with the aperture 5 in the bottom 3 of the vessel body and the bosses 6 register with bores 17 provided in a moulded plastics body part of the X4 control 14 so that fixing screws 18 can be inserted and tightened. By this means the X4 control is pulled down towards the bottom of the vessel 1 and so the heating element 8 is pulled down into secure engagement with the tops of the support ribs 4.

In the arrangement of Figure 2, the rim 10 of the heating element could be inverted as compared with the illustrated rim so long as care was taken when assembling the heating element into the vessel body to ensure that the seal 11 did not slip out of proper engagement with the outermost face 12 of the rim 10. Such an arrangement might be advantageous in that it would ensure that in the event of the vessel boiling dry a quantity of water would remain in the trough defined by the upturned rim 10 and would protect the seal 11 from any resultant overheating of the heating element 8 until such time as the X4 control operated.

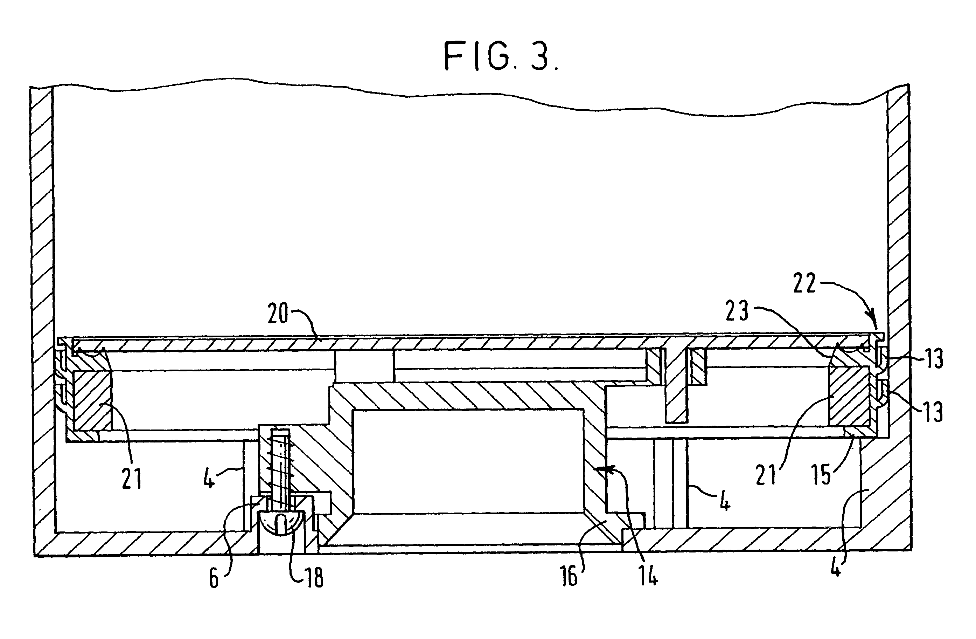

Figure 3 shows a further embodiment of the present invention which in principle is the same as the embodiment just described but employs a completely flat heating element 20 which is supported, with sealing, on a separate support ring 21 which provides a mounting for a heat-resistant elastomeric sealing ring 22 and seats upon the support ribs 4.

Referring to Figure 3, the support ring 21 is simply an annular member of rectangular cross-section which underlies the periphery of the heating element 20 for supporting the same on the rubs 4. The ring seal 22 is similar in many respects to the seal 11 of the first embodiment but has a portion 23 which locates between the underside of the heating element 20 and the upper surface of the support ring 21. The seal portion 23 may have formations as shown on its upper surface to enhance its performance against the underside of the heating element 20. The seal 22 and the support ring 21 may be integral with each other, for example by being formed together in a twin shot moulding, to simplify assembly, or alternatively and to reduce the cost the support nng 31 may simply be a length cut from an extruded tube.

In all other respects the second embodiment reflects the teachings of the first embodiment. The X4 control 14 is secured to the heating element 20 and when the fixing screws 18 are tightened the heating element 20 is pulled down towards the upper surface of the sealing ring 21 thereby compressing the seal portion 23 therebetween and ensuring a satisfactory seal therebetween. Sealing of the heating element 20 with respect to the vessel body is effected by virtue of the sealing between the support ring 21 and the vessel body, achieved by the fins 13 of the ring seal 22, and the sealing just mentioned between the support ring 21 and the heating element 20.

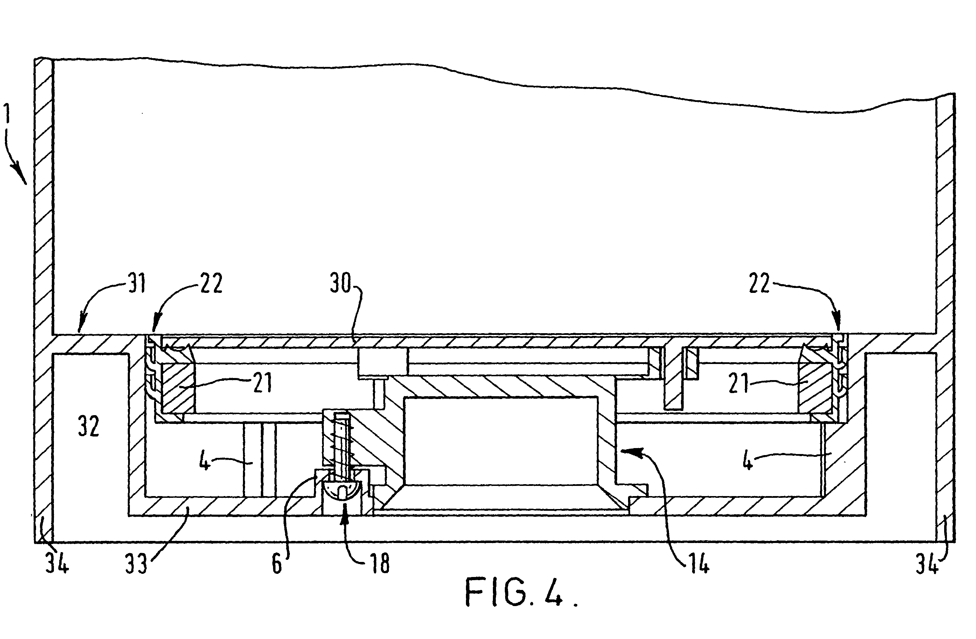

Figure 4 shows yet another embodiment which represents a modification of the Figure 3 embodiment to enable a smaller diameter heating element 30 to be accommodated. As shown, the moulded plastics vessel body 1 is provided at its lower end with an internal flange 31 which supports a downwardly-extending wall 32 terminating in a horizontal web 33 which performs much the same function as the vessel bottom 3 in the previously-described embodiments, namely provides a mounting for an X4 control as aforementioned. To conceal the reduced diameter region constituted by the elements 31, 31 and 33, a cosmetic skirt 34 is moulded integrally with the vessel body 1 and continues the profile of the body to below the level of horizontal web 33 to provide stability to the vessel.

The principal advantages of the aforementioned arrangements reside in their simplicity and inexpensiveness. At its simplest, the present invention is well adapted to low cost vessel designs and enables a vessel to be provided with a planar heating element, which is per se more expensive than a conventional sheathed type immersion heating element, at a cost which is competitive with vessels having conventional sheathed type immersions heating elements.

Variations and modifications of the described embodiments will occur to those possessed of appropriate skill and knowledge without departure from the scope of the invention as set forth in the appended claims. For example, whereas the invention has been described in the foregoing by reference to vessel bodies of uniform cross-section which enable the heating element to be assembled with the vessel through the top opening of the vessel, the invention has wider application. The arrangements described could relate to the mounting of a planar heating element into a bottom part only of a vessel body and an upper part, which could be of any desired shape, could subsequently be secured on top of the bottom part. Exotically shaped vessel bodies could readily be accommodated in this way.

Furthermore, while the invention has been described in the foregoing by reference to plastics bodied vessels, the teachings of the invention could similarly be applied to glass vessel bodies or to vessel bodies formed of ceramics, porcelain or china.

Finally, whereas the invention has been described by reference to cordless vessels provided with 360° cordless connector sets, for example the Otter Controls' CS4/CP7 system, the invention is equally applicable to more conventional non-360° cordless vessels and to corded vessels.

## Claims

1. An electrically heated vessel (1) having a planar heating element (8;20;30) secured therewithin by virtue of the planar heating element (8;20;30) being pulled down towards integrally-formed abutment means (4) provided in the vessel (1) by means of a structure (14) affixed to the bottom (3) of the vessel (1) **characterized in that** the periphery of the planar heating element (8;20;30) or of a support ring (21) therefor is laterally spaced apart from the internal wall of the vessel (1) and an elastomeric ring seal (11;22) is provided to seal said space.

2. A vessel as claimed in claim 1 wherein the structure (14) that is affixed to the bottom (3) of the vessel (1) is a thermally-sensitive control device and/or a cordless connector component.

3. A vessel as claimed in claim 2 wherein the cordless connector component is a 360° connector component accessible by a complementary connector component through an opening (5) in the bottom (3) of the vessel.

4. A vessel as claimed in any preceding claim formed of plastics material, or formed of glass, ceramic, porcelain or china.

5. A vessel as claimed in any of the preceding claims wherein the elastomeric ring seal extends around the periphery of the heating element (8;20;30) and has one or more outwardly extending circumferential fins (13) engaging the internal wall (1) of the vessel.

6. A vessel as claimed in claim 5 wherein the heating element (8) has a peripheral portion (12) formed so as to extend generally parallel to the internal wall (1) of the vessel, and the ring seal (11) comprises a generally cylindrical portion extending around said peripheral portion (12) of the heating element (8) and a plurality of said fins (13) are provided spaced apart from each other on said generally cylindrical portion of the ring seal (11).

7. A vessel as claimed in any of claims 1 to 4 wherein a support ring (21) is provided between the heating element (20;30) and said abutment means (4), and said elastomeric ring seal (22) has a horizontal portion (23) which operates between the heating element (20;30) and the support ring (21) and also has a vertical portion which operates between the outer periphery of the support ring (21) and the internal wall (1) of the vessel.

8. A vessel as claimed in claim 7 wherein the elastomeric ring seal (22) extends around the outer periphery of the support ring (21), the ring seal having one or more outwardly extending circumferential fins (13) engaging the internal wall (1) of the vessel.

9. A vessel as claimed in any of the preceding claims having a reduced cross-section portion (31,32,33) formed in its base and wherein the heating element (30) is located within the reduced cross-section portion.

10. A vessel as claimed in any of the preceding claims formed so as to permit the heating element (8;20;30) to be assembled into the vessel (1) through an opening in the top thereof.

11. A vessel as claimed in any of the preceding claims which is formed in at least two parts, namely an open bottom part enabling the heating element to be assembled into the bottom part of the vessel through the opening thereof and a top part secured to the bottom part.

12. A vessel as claimed in claim 11 wherein the top part of the vessel has at least one cross-section smaller in size than the heating element.

13. A vessel as claimed in any of the preceding claims wherein the heating element (8;20;30) is a thick film heating element, or wherein the heating element comprises a metal plate having a sheathed heating element clamped or clenched to the underside thereof, or wherein the heating element comprises a die cast metal body having a heating element incorporated therein.

14. A vessel as claimed in any of the preceding claims wherein the bottom (3) of the vessel is integral with the vessel side walls (1).

15. A vessel as claimed in claim 1, comprising:
a vessel body moulding having a bottom wall (3) integral with side walls (1) and an open top;
a sub-assembly comprising the planar heating element (8;20;30) and at least one of an overtemperature protection device and an electrical inlet connector for the heating element (14), said sub-assembly being sized to be insertable into the open top of the vessel body; and
means (18) securing said overtemperature protection device/electrical inlet connector (14) to the bottom wall (3) of the vessel body moulding (1) so as to hold the planar heating element (8;20;30) relative to said abutment means (4).

16. A method of manufacturing an electrically heated water boiling vessel, said method comprising:
forming a vessel body moulding (1) having a bottom wall (3) integral with side walls (1) and an open top;
providing integrally-formed abutment means (4) within said vessel body moulding, said abutment means defining a seating for assembly of a planar heating element (8;20;30) into the vessel body moulding;
forming a sub-assembly comprising a planar heating element (8;20;30) and at least one of an overtemperature protection device and an electrical inlet connector for the heating element (14), said planar heating element (8;20;30) being sized to be insertable into the open top of the vessel body moulding and the vessel body moulding being sized to enable the planar heating element (8;20;30) to be moved down within the vessel towards said abutment means with a lateral spacing between the periphery of the heating element (8;20;30) and the internal wall of the vessel moulding when the heating element (8;20;30) is fully introduced;
providing an elastomeric ring seal (11;22) adapted to seal the spacing between the periphery of the planar heating element (8;20;30) or of a support ring (21) therefor and the internal wall (1) of the vessel body moulding when said sub-assembly is introduced fully into the vessel body moulding;
introducing said sub-assembly fully into the vessel body moulding through the open top thereof with the elastomeric ring seal (11;22) in operative position; and
securing said overtemperature protection device/electrical inlet connector to the bottom wall (3) of the vessel body moulding (1) so as to secure the planar heating element (8;20;30) relative to said seating (4).

## Patentansprüche

1. Elektrisch beheiztes Gefäß (1) mit einem planaren Heizelement (8; 20; 30), das darin befestigt ist, indem es mittels einer am Boden (3) des Gefäßes (1) angebrachten Struktur (14) nach unten in Richtung einer an dem Gefäß (1) angeformten Anstoßeinrichtung (4) gezogen wird, **dadurch gekennzeichnet, daß** der Umfang des planaren Heizelements (8; 20; 30) oder eines Stützrings (21) dafür einen seitlichen Abstand von der Innenwand des Gefäßes (1) aufweist und eine elastische Ringdichtung (11; 22) zum Abdichten dieses Abstands vorgesehen ist.

2. Gefäß nach Anspruch 1, wobei die an dem Boden (3) des Gefäßes (1) angebrachte Struktur (14) in einer wärmeempfindlichen Steuervorrichtung und/oder einer schnurlosen Verbindungskomponente besteht.

3. Gefäß nach Anspruch 2, wobei die schnurlose Verbindungskomponente in einer 360°-Verbindungskomponente besteht, die durch eine Öffnung (5) in dem Gefäßboden (3) für eine komplementäre Verbindungskomponente zugänglich ist.

4. Gefäß nach einem der vorstehenden Ansprüche, das aus Kunststoff, Glas, Keramik oder Porzellan gebildet ist.

5. Gefäß nach einem der vorstehenden Ansprüche, wobei die elastische Ringdichtung den Umfang des Heizelements (8; 20; 30) entlang verläuft und mindestens eine sich nach außen erstreckende Umfangsrippe (13) aufweist, die in die Gefäßinnenwand (1) eingreift.

6. Gefäß nach Anspruch 5, wobei das Heizelement (8) einen Umfangsbereich (12) aufweist, der generell parallel zu der Gefäßinnenwand (1) geformt ist, und die Ringdichtung (11) einen generell zylindrischen Bereich aufweist, der den Umfangsbereich (12) des Heizelements (8) entlang verläuft und an dem mehrere der Rippen (13) in Abstand voneinander angeordnet sind.

7. Gefäß nach einem der Ansprüche 1 bis 4, wobei ein Stützring (21) zwischen dem Heizelement (20; 30) und der Anstoßeinrichtung (4) angeordnet ist, und die elastische Ringdichtung (22) einen horizontalen Bereich (23) aufweist, der zwischen dem Heizelement (20; 30) und dem Stützring (21) wirkt, sowie einen vertikalen Bereich, der zwischen dem äußeren Umfang des Stützrings (21) und der Gefäßinnenwand (1) wirkt.

8. Gefäß nach Anspruch 7, wobei die elastische Ringdichtung. (22) den äußeren Umfang des Stützrings (21) entlang verläuft, und die Ringdichtung mindestens eine nach außen verlaufende Umfangsrippe (13) aufweist, die in die Gefäßinnenwand (1) eingreift.

9. Gefäß nach einem der vorstehenden Ansprüche, bei dem in dessen Basis ein Bereich mit reduziertem Querschnitt (31, 32, 33) gebildet und das Heizelement (30) innerhalb dieses Bereichs angeordnet ist.

10. Gefäß nach einem der vorstehenden Ansprüche, das so ausgebildet ist, daß es einen Einbau des Heizelements (8; 20; 30) in das Gefäß (1) durch seine offene Oberseite ermöglicht.

11. Gefäß nach einem der vorstehenden Ansprüche, das aus wenigstens zwei Abschnitten besteht, nämlich einem offenen Bodenabschnitt, der einen Einbau des Heizelements in den Gefäßbodenabschnitt durch dessen Öffnung ermöglicht, und einem an dem Bodenabschnitt befestigten Oberseitenabschnitt.

12. Gefäß nach Anspruch 11, wobei der Gefäßoberseitenabschnitt wenigstens einen Querschnitt aufweiset, der kleiner ist als das Heizelement.

13. Gefäß nach einem der vorstehenden Ansprüche, wobei das Heizelement (8; 20; 30) in einem Dickfilm-Heizelement besteht, oder wobei das Heizelement eine Metallplatte mit einem an deren Unterseite angeklemmten oder angepreßten verschalten Heizelement aufweist, oder wobei das Heizelement einen Druckguß-Metallkörper mit darin eingeschlossenem Heizelement aufweist.

14. Gefäß nach einem der vorstehenden Ansprüche, wobei der Boden (3) des Gefäßes an den Gefäßseitenwänden (1) angeformt ist.

15. Gefäß nach Anspruch 1, mit
einem Gefäßformkörper, der eine Bodenwand (3) mit angeformten Seitenwänden (1) und eine offene Oberseite aufweist;
einer Sub-Anordnung, die das planare Heizelement (8; 20; 30) und eine Überhitzungsschutzvorrichtung und/oder eine elektrische Eingangsverbindung für das Heizelement (14) aufweist, wobei die Sub-Anordnung so bemessen ist, daß sie in die offene Oberseite des Gefäßkörpers einsetzbar ist; und
einer Einrichtung (18) zum Befestigen der Überhitzungsschutzvorrichtung bzw. der elektrischen Eingangsverbindung (14) an der Bodenwand (3) des Gefäßformkörpers (1), um so das planare Heizelement (8; 20; 30) relativ zu der Anstoßeinrichtung (4) festzuhalten.

16. Verfahren zum Herstellen eines elektrisch beheizten Wasserkochgefäßes, wobei
ein Gefäßformkörper (1) gebildet wird, der eine an Seitenwänden (1) angeformte Bodenwand (3) und eine offene Oberseite aufweist;
eine innerhalb des Gefäßformkörpers angeformte Anstoßeinrichtung (4) vorgesehen wird, die eine Aufnahme zum Einbau eines planaren Heizelements (8; 20; 30) in den Gefäßformkörper definiert;
eine Sub-Anordnung gebildet wird, die ein planares Heizelement (8; 20; 30) und eine Überhitzungsschutzvorrichtung und/oder eine elektrische Eingangsverbindung für das Heizelement (14) aufweist, wobei das planare Heizelement (8; 20; 30) so bemessen ist, daß es in die offene Oberseite des Gefäßformkörpers einsetzbar ist, und der Gefäßformkörper so bemessen ist, daß er eine Abwärtsbewegung des planaren Heizelements (8; 20; 30) innerhalb des Gefäßes in Richtung der Anstoßeinrichtung mit einem seitlichen Abstand zwischen dem Umfang des Heizelements (8; 20; 30) und der Innenwand des Gefäßformkörpers bei voll eingeführtem Heizelement (8; 20; 30) ermöglicht;
eine elastische Ringdichtung (11; 22) vorgesehen wird, die zum Abdichten des Abstands zwischen dem Umfang des planaren Heizelements (8; 20; 30) oder eines Stützrings (21) dafür und der Innenwand (1) des Gefäßformkörpers bei voll in den Gefäßformkörper eingeführter Sub-Anordnung ausgelegt ist;
die Sub-Anordnung durch die offene Oberseite des Gefäßformkörpers voll in diesen eingeführt wird, wobei sich die elastische Ringdichtung (11; 22) in wirksamer Position befindet; und
die Überhitzungsschutzvorrichtung bzw. die elektrische Eingangsverbindung an der Bodenwand (3) des Gefäßformkörpers (1) befestigt wird, um das planare Heizelement (8; 20; 30) relativ zu der Aufnahme (4) festzuhalten.

## Revendications

1. Récipient (1) chauffé électriquement comportant un élément chauffant plat (8; 20; 30) dans ce récipient grâce au fait que l'élément chauffant (8; 20; 30) est tiré vers le bas en direction de moyens de butée (4) formés d'un seul tenant et prévus dans le récipient (1), au moyen d'une structure (14) fixée sur le fond (3) du récipient (1), **caractérisé en ce que** la périphérie de l'élément chauffant plat (8; 20; 30) ou d'un anneau de support (21) pour cet élément est distant latéralement de la paroi intérieure du récipient (1), et qu'un joint d'étanchéité annulaire élastomère (11; 22) est prévu pour fermer de façon étanche ledit espace.

2. Récipient selon la revendication 1, dans lequel la structure (14), qui est fixée sur le fond (3) du récipient (1) est un dispositif de commande thermosensible et/ou un composant de connecteur sans fil.

3. Récipient selon la revendication 2, dans lequel le composant de connecteur sans fil est un composant de connecteur à 360° accessible au moyen d'un composant de connecteur complémentaire par une ouverture (5) formée dans le fond (3) du récipient.

4. Récipient selon l'une quelconque des revendications précédentes, formé d'une matière plastique ou formé de verre, d'une céramique, d'une porcelaine ou faïence.

5. Récipient selon l'une quelconque des revendications précédentes, dans lequel le joint d'étanchéité annulaire élastomère s'étend autour de la périphérie de l'élément chauffant (8; 20; 30) et possède une ou plusieurs ailettes circonférentielles (13) qui s'étendent vers l'extérieur et s'appliquent contre la paroi intérieure (1) du récipient.

6. Récipient selon la revendication 5, dans lequel l'élément chauffant (8) possède une partie périphérique (12) formée de manière à s'étendre d'une manière générale parallèlement à la paroi intérieure (1) du récipient, et le joint d'étanchéité annulaire (11) comprend une partie de forme générale cylindrique, qui s'étend autour de ladite partie périphérique (12) de l'élément chauffant (8), et une pluralité desdites ailettes (13) sont disposées en étant espacées les unes des autres sur ladite partie de forme générale cylindrique du joint d'étanchéité annulaire (11).

7. Récipient selon l'une quelconque des revendications 1 à 4, dans lequel un anneau de support (21) est prévu entre l'élément chauffant (20; 30) et lesdits moyens de butée (4), et ledit joint d'étanchéité annulaire élastomère (22) possède une partie horizontale (23), qui agit entre l'élément chauffant (20; 30) et l'anneau de support (21) et comporte une partie verticale, qui agit entre la périphérie extérieure de l'anneau de support (21) et la paroi intérieure (1) du récipient.

8. Récipient selon la revendication 7, dans lequel le joint d'étanchéité élastomère (22) s'étend autour de la périphérie extérieure de l'anneau de support (21), le joint d'étanchéité annulaire possédant une ou plusieurs ailettes circonférentielles (13) qui s'étendent vers l'extérieur et s'appliquent contre la paroi intérieure (1) du récipient.

9. Récipient selon l'une quelconque des revendications précédentes, possédant une partie de section transversale réduite (31, 32, 33) formée dans sa base et dans lequel l'élément chauffant (30) est situé à l'intérieur de la partie de section transversale réduite.

10. Récipient selon l'une quelconque des revendications précédentes, formé de manière à permettre l'assemblage de l'élément chauffant (8; 20; 30) dans le récipient (1), à travers une ouverture formée dans la partie supérieure de ce dernier.

11. Récipient selon l'une quelconque des revendications précédentes, qui est formé d'au moins deux parties, à savoir une parie inférieure ouverte permettant de monter l'élément chauffant dans la partie inférieure du récipient, par ouverture de ce dernier, et une partie supérieure fixée à la partie inférieure.

12. Récipient selon la revendication 11, dans lequel la partie supérieure du récipient possède au moins une section transversale ayant des dimensions inférieures à celles de l'élément chauffant.

13. Récipient selon l'une quelconque des revendications précédentes, dans lequel l'élément chauffant (8; 20; 30) est un élément chauffant en forme de film épais, ou dans lequel l'élément chauffant comprend une plaque métallique possédant un élément chauffant gainé serré ou agrafé sur la face inférieure de la plaque, ou dans lequel l'élément chauffant comprend un corps en métal coulé sous pression, dans lequel est incorporé un élément chauffant.

14. Récipient selon l'une quelconque des revendications précédentes, dans lequel le fond (3) du récipient est réalisé d'un seul tenant avec les parois latérales (1) du récipient.

15. Récipient selon la revendication 1, comprenant:
une pièce moulée du corps du récipient possédant une paroi inférieure (3) d'un seul tenant avec les parois latérales (1) et d'une partie supérieure ouverte;
un sous-ensemble comprenant l'élément chauffant plat (8; 20; 30) et au moins l'un d'un dispositif de protection contre une température excessive et d'un connecteur électrique d'entrée pour l'élément chauffant (14), ledit sous-ensemble étant dimensionné de manière à pouvoir être transféré dans la partie supérieure ouverte du corps du récipient;
des moyens (18) fixant ledit dispositif de protection contre une température excessive/ledit connecteur d'entrée électrique (14) à la paroi inférieure (3) de la pièce moulée (1) du corps du récipient de manière à retenir l'élément chauffant plat (8; 20; 30) par rapport auxdits moyens de butée (4).

16. Procédé pour fabriquer une bouilloire chauffée électriquement, ledit procédé consistant à:
former une pièce moulée (1) du corps du récipient possédant une paroi inférieure (3) réalisée d'un seul tenant avec des parois latérales (1) et une partie supérieure ouverte;
prévoir des moyens de butée (4) formés d'un seul tenant à l'intérieur de ladite pièce moulée du corps du récipient, ledit moyens de butée définissant un siège pour l'assemblage d'un élément chauffant plat (8; 20; 30) dans la pièce moulée du corps du récipient;
former un sous-ensemble comprenant un élément chauffant plat (8; 20; 30) et au moins un dispositif de protection contre une température excessive et un connecteur d'entrée électrique pour l'élément chauffant (14), ledit élément chauffant plat (8; 20; 30) étant dimensionné de manière à pouvoir être inséré dans la partie supérieure ouverte de la pièce moulée du corps du récipient et la pièce moulée du corps du récipient étant dimensionnée de manière à permettre l'abaissement de l'élément chauffant plat (8; 20; 30) à l'intérieur du récipient en direction desdits moyens de butée, un espacement latéral étant présent entre la périphérie de l'élément chauffant (8; 20; 30) et la paroi intérieure de la pièce moulée du récipient lorsque l'élément chauffant (8; 20; 30) est complètement introduit;
prévoir un joint d'étanchéité annulaire élastomère (11; 22) adapté pour fermer de façon étanche l'espace présent entre la périphérie de l'élément chauffant plat (8; 20; 30) ou un anneau de support (21) pour cet élément et la paroi intérieure (1) de la pièce moulée du corps du récipient lorsque ledit sous-ensemble est complètement introduit dans la pièce moulée du corps du récipient;
introduire complètement ledit sous-ensemble dans la pièce moulée du corps du récipient par l'extrémité supérieure ouverte de ce dernier, alors que le joint d'étanchéité annulaire (11; 22) est dans une position opérationnelle; et
fixer ledit dispositif de protection contre une température excessive/ledit connecteur électrique d'entrée à la paroi intérieure (3) de la pièce moulée (1) du corps du récipient de manière à fixer l'élément chauffant plat (8; 20; 30) par rapport audit siège (4).
